# EUROPEAN PATENT APPLICATION

(11) **EP 3 001 744 A1**
(43) Date of publication of application: **30.03.2016**
(21) Application number: 14306509.2
(22) Date of filing: 29.09.2014
(51) Int. Cl.: H04W 72/00

(54) **Coverage enhancement for MBSFN transmission**

(71) Applicant: ALCATEL LUCENT, 92100 Boulogne-Billancourt (FR)
(72) Inventor: Wong, Shin Horng, Swindon, Wiltshire WI SN5 7DJ (GB); Worrall, Chandrika, Swindon, Wiltshire WI SN5 7DJ (GB)
(74) Representative: Huber, Meik

(57) **Abstract**

The present invention relates to coverage enhancement in a cellular network, e.g. for coverage enhancement in a Multimedia Broadcast Multicast Service application in an LTE cellular network. At least one MBSFN repetition pattern indicating frames that contain repetitive samples of an MBSFN message is generated. The at least one MBSFN repetition pattern is signaled to the User Equipment.

## Description

The present invention relates to coverage enhancement in a cellular network, e.g. to coverage enhancement for Multimedia Broadcast Multicast Services in an LTE cellular network.

### BACKGROUND OF THE INVENTION

This section introduces aspects that may be helpful in facilitating a better understanding of the invention. Accordingly, the statements of this section are to be read in this light and are not to be understood as admission about what is in the prior art.

In enhanced 4G wireless systems and especially in future 5G wireless systems, a large number of devices, e.g. user equipment devices (UE), will be present in the coverage area of a Base Station, e.g. an eNodeB. For scenarios known by the paradigm "Internet of Things", Machine Type Communication (MTC) devices are User Equipments that are used for specific applications. An example of such a Machine Type Communication device is a smart meter. In many cases, these devices are not mobile, but are installed at fixed locations. Some of these devices are located at places where the received signal quality is low due to the high penetration losses. In an example scenario, the devices are located at the basement of a building. 3GPP currently works on a specification including coverage enhancement for low cost Machine Type Communication devices. According to the state of the art, repetition of physical channels, i.e. resending the same signal on the same radio resource, is considered as a solution to enhance the coverage area for Machine Type Communication User Equipments. On a device to device basis, it is decided if the signal has to be repeated and send to this device on the same physical channel. Devices in low signal quality areas can request retransmission and have multiple chances to receive the signal. The number of repetitions needed for successful coverage enhancement is high, e.g. 100 repetitions, which significantly reduces the spectral efficiency.

Multimedia Broadcast Multicast Service (MBMS) is specified in 3GPP for communication to a group of User Equipments simultaneously in a radio resource efficient manner. Waveform combining properties of Multimedia Broadcast Multicast Service result in high spectral efficiency. For example, software updates, meter reporting triggers or critical information on an emergency situation, e.g. gas leak resulting in shutting down all the meters temporarily, is delivered to a group of Machine Type Communication devices by a Multimedia Broadcast Multicast Service transmission.

Multicast Broadcast Single Frequency Network (MBSFN) is a feature to realize MBMS transmission. Information is broadcast to multiple User Equipments. MBMS data is transmitted using a Physical Multicast Channel (PMCH).

### SUMMARY OF THE INVENTION

It is an object of the invention to provide advanced methods and devices for coverage enhancement in cellular networks via MBSFN. Coverage enhancement is understood as at least temporarily or locally improving the data transmission quality between a transmitter and a receiver. This includes also the possibility to extend the coverage area of a Base Station to areas where only poor signal quality is available and due to the poor signal quality data reception with methods according to the prior art is hardly possible and fails. It is a further object of the invention to improve reception of the signal there and to make decoding of the information transmitted in the signal is possible.

According to one embodiment, in order to reach Machine Type Communication User Equipments in the coverage enhanced region, the PMCH has to be transmitted multiple times.

According to one embodiment, a method for coverage enhancement in a cellular network, e.g. an LTE network is proposed. The method is performed in a transmitter, e.g. a Base Station or an eNodeB or a device forwarding a received service to at least one other device. The method generates at least one MBSFN repetition pattern. The MBSFN repetition pattern indicates frames that contain repetitive samples of an MBSFN message. The method further signals the at least one MBSFN repetition pattern to the User Equipment. Signaling means transmitting the MBSFN repetition pattern to the User Equipment, preferably on a signaling or control channel. In one embodiment, the MBSFN repetition pattern is broadcast to User Equipments in the coverage area of the Base Station. In one embodiment, the MBSFN repetition pattern is communicated to the User Equipment by device to device communication. In one embodiment, the MBSFN repetition pattern is known by the User Equipments, e.g. because they have been informed about the MBSFN repetition pattern during a setup mode or the MBSFN repetition pattern was stored in the User Equipment during manufacturing. In one embodiment, the User Equipments are Machine Type Communication devices. This way, an efficient way for sending MBSFN messages repeatedly is provided. This has the advantage that MBMS transmission is combined with message repetition. MBMS transmission significantly improves spectral efficiency. But it is disadvantageous in case some User Equipments suffer from poor signal quality. This effect is especially disadvantageous in case of Machine Type Devices, which are not mobile, because there is no chance that they might move to an area with better signal quality and receive the signal in better quality there. On the other hand, message repetition reduces at first sight spectral efficiency because data is sent multiple times. But repetition of data to be sent is advantageous because it is a solution for coverage enhancement. Thus, by the above described mechanism for MBSFN message repetition, an overall improvement in terms of spectral efficiency is achieved and coverage is extended. In order to benefit from the coverage enhancement as described above, the receiving User Equipments need to be adapted to the method. The above described method has the further advantage that legacy User Equipments, which are not adapted to the above mentioned method, still can receive the first transmission and receive a signal the same way as in a normal MBMS transmission. Thus, the method according to the invention has the advantage that it can serve Coverage Enhanced User Equipments, but at the same time, User Equipments not suitable for coverage enhancement enjoy the same service level as they would do in a system according to the prior art.

According to one embodiment, the at least one MBSFN repetition pattern indicates radio frames and radio subframes which contain repetition samples. In one embodiment, Physical Resource Blocks (PRB) containing repetitive samples are indicated in the MBSFN repetition pattern in addition or alternatively to the radio frames and radio subframes. This has the advantage that low cost Coverage Enhanced User Equipments, which due to technical reasons are bandwidth restricted, e.g. to 1.4 MHz, configure their selves to the right band according to the MBSFN repetition pattern and the Physical Resource Blocks which are indicated in the MBSFN repetition pattern. This gives flexibility to the network operator, because Physical Resource Blocks in the whole band can be dedicated to MBSFN repetition messages even if low cost Machine Type Communication devices have limited bandwidth, because the receiving devices configure their selves to the right band according to the MBSFN repetition pattern.

According to one embodiment, the MBSFN message is sent repeatedly in the Physical Multicast Channel (PMCH) of the frames as indicated in the MBSFN repetition pattern. MBSFN message means the data which are to be sent by MBSFN, so to say MBSFN data. In contrast, MBSFN repetition pattern means a schema which indicates the positions in a data stream at which the MBSFN message is located, but does not mean the data itself. For sending the MBSFN data, the Physical Multicast Channel (PMCH) in the frames indicated by the MBSFN repetition pattern is used. Thus, the MBSFN repetition pattern points at least indirectly to the Physical Multicast Channel in which the MBSFN message is transmitted. This ensures maximal compatibility with current LTE systems and enables serving of Coverage Enhanced User Equipments and legacy User Equipments.

According to one embodiment, a fist MBSFN repetition pattern is defined. Further, a second MBSFN repetition pattern is defined. The second MBSFN repetition pattern contains lesser number of repetition frames compared to the first MBSFN repetition pattern. The second MBSFN repetition pattern is a subset of the first MBSFN repetition pattern.

According to one embodiment, a Repetition Multiplying Factor is defined. The Repetition Multiplying Factor indicates a number of continuous MBSFN repetition patterns. In the frames according to these MBSFN repetition patterns, the same MBSFN message is repeated. The Repetition Multiplying Factor is signaled to the User Equipments in the coverage area of a Base Station. Using this information, the User Equipments generates a frame structure consisting of RMF * MBSFN repetition patterns which are aligned one after another. This gives the overall repetition structure of frames containing the same MBSFN message.

According to one embodiment, the step of signaling the at least one MBSFN repetition pattern further comprises signaling the Repetition Multiplying Factor. According to one embodiment, the Repetition Multiplying Factor is sent in a PMCH message. According to one embodiment, the MBSFN repetition pattern is only signaled to Coverage Enhanced User Equipments.

According to one embodiment, a method for coverage enhancement in a cellular network, e.g. an LTE network is proposed. The method is performed in a receiver device, e.g. a User Equipment device in an LTE network, e.g. a Machine Type Communication device. At least one MBSFN repetition pattern is received. The MBSFN repetition pattern indicates frames that contain repetitive samples of an MBSFN message. This means, the frames indicated in the MBSFN repetition pattern are frames in a data stream containing the same MBSFN message information which is repeated. A signal containing repetitive samples of an MBSFN message is received according to the received MBSFN repetition pattern. At least one repetition of a Physical Multicast Channel containing repetitive samples is used to decode the MBSFN message.

According to one embodiment, the at least one MBSFN repetition pattern indicates radio frames and radio subframes which contain repetition samples. In one embodiment, Physical Resource Blocks (PRB) containing repetitive samples are indicated in the MBSFN repetition pattern in addition or alternatively to the radio frames and radio subframes. This has the advantage that low cost Coverage Enhanced User Equipments, which are due to technical reasons bandwidth restricted, e.g. to 1.4 MHz, configure their selves to the right band according to the MBSFN repetition pattern and the Physical Resource Blocks which are indicated in the MBSFN repetition pattern. This gives flexibility to the network operator, because Physical Resource Blocks in the whole band can be dedicated to MBSFN repetition messages even if low cost Machine Type Communication devices have limited bandwidth, because the receiving devices configure their selves to the right band according to the MBSFN repetition pattern.

According to one embodiment, the energy of at least one repetition of the Physical Multicast Channel containing the repetitive samples of the MBSFN message is accumulated for decoding the MBSFN message. This enhances chances for a message to be decoded in areas with low signal quality. A Coverage Enhanced User Equipment is equipped to accumulate the energy of the repetitive samples.

According to one embodiment, a Repetition Multiplying Factor is received. The Repetition Multiplying Factor indicates a number of continuous MBSFN repetition patterns. In the frames according to these MBSFN repetition patterns, the same MBSFN message is repeated. The Repetition Multiplying Factor indicates the number of continuous MBSFN repetition patterns in which repetition frames the same MBSFN message are repeated. The Repetition Multiplying Factor is signaled to the User Equipments in the coverage area of a Base Station. Using this information, the User Equipment generates a frame structure consisting of RMF * MBSFN repetition pattern which are aligned one after another. This gives the overall repetition structure of frames containing the same MBSFN message. According to one embodiment, the step of receiving at least one MBSFN repetition pattern contains receiving the Repetition Multiplying Factor. According to one embodiment, the Repetition Multiplying Factor is received in a PMCH message.

According to one embodiment, a Base Station in a cellular network is proposed. The Base Station performs the method as described above.

According to one embodiment, a User Equipment in a cellular network is proposed. The User Equipment performs the method as described above.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a first MBSFN repetition pattern according to the invention
- Fig. 2: shows a second MBSFN repetition pattern according to the invention
- Fig. 3: shows the use of a Repetition Multiplying factor according to the invention
- Fig. 4: depicts a method according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

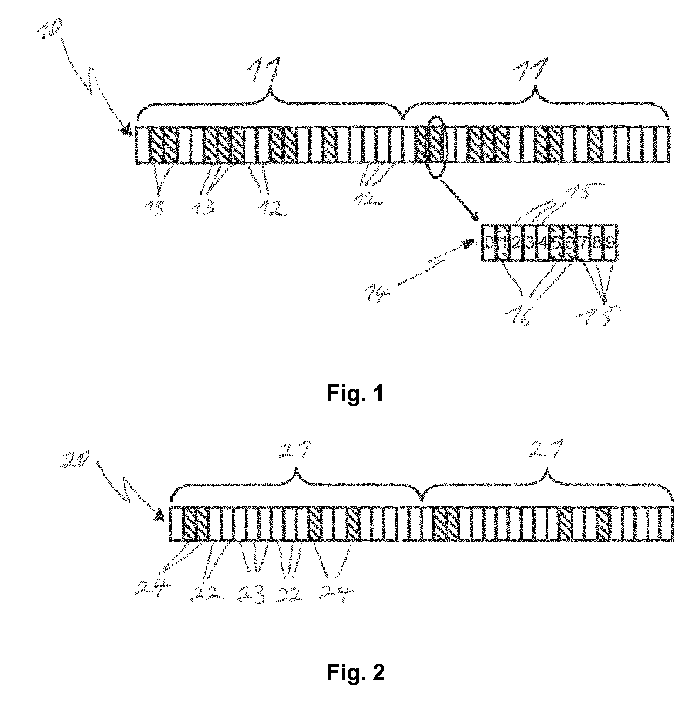

Fig. 1 shows a first MBSFN repetition pattern 11 according to the invention. The MBSFN repetition pattern 11 is a structure to represent successive frames 12, 13 in a data stream 10. So to say, the MBSFN repetition pattern 11 represents a number of consecutive frames 12, 13 of a data stream 10. These frames 12, 13 are frames as defined by 3GPP according to the LTE standard. In the embodiment according to Fig. 1, eight frames 13 out of twenty consecutive frames 12, 13 are marked as radio frames containing MBSFN repetitions. These frames 13 are frames at the position 1, 2, 5, 6, 7, 10, 11 and 14 when counting the frames from the beginning of a corresponding MBSFN repetition pattern 11, wherein the first frame has the position number 0 and the last frame has the position number 19. This means, an MBSFN message is sent repeatedly in these repetition frames 13. These repetition frames 13 are indicated in Fig. 1 by hatching. Also the frame containing the original message of the repeated MBSFN message is indicated as MBSFN repetition frame. Thus, by defining a certain number of dedicated frames in a MBSFN repetition pattern 11 as repetition frames 13, the number of repetitions for a MBSFN message is defined. In one embodiment, a frame 13 dedicated to send MBSFN repetitions contains subframes 16 dedicated to contain repetition data and subframes 15 not containing repetition data. Such an exemplary subframe structure 14 is depicted in Fig. 1. The first subframe has the position number 0 and the last subframe has the position number 9. The subframes 16 at the positions 1, 5 and 6 contain MBSFN repetition data. Thus, these subframes 16 at the positions 1, 5 and 6 contain Physical Multicast Channel (PMCH) repetition samples. An MBSFN message which is repeated is sent by sending a repetition of the PMCH data in at least one subframe 16 containing MBSFN repetition data. These subframes 1, 5 and 6 are different to those used for normal MBSFN transmission since the PMCH for normal MBSFN transmission is not repeated. Coverage Enhances User Equipments are receiving a data stream 10 which contains frames 13 carrying MBSFN repetition data and other frames 12 in accordance with the MBSFN repetition pattern 11. The User Equipment receiving a data stream 10 accumulates the energy received on the Physical Multicast Channel (PMCH) of the frames 13 indicated as containing MBSFN repetition data in the MBSFN repetition pattern 11. So to say, the User Equipment receiving the data stream 10 stores the signal contained in the first repetition frame 13 and adds the signal in the consecutive repetition frames 13 to this signal. As the consecutive repetition frames 13 contain the same MBSFN message as the first repetition frame 13, by accumulating the energy of the repetition frames 13, the SNR of the received signal is increased. The accumulated energy is used to decode the MBSFN repetition message. By knowing the MBSFN repetition pattern 11, the User Equipment knows the number of PMCH repetitions that need to be accumulated and knows where these repetition samples are located. The MBSFN repetition pattern 11 is broadcast by the Base Station to the all User Equipments. In one embodiment, the MBSFN repetition pattern 11 is multicast or signaled to all or a couple of dedicated Coverage Enhanced User Equipments. In one embodiment, the Coverage Enhances User Equipments and the Base Station have knowledge about the MBSFN repetition pattern 11, e.g. because it is implemented in the manufacturing process or during a setup process when installing the devices.

Fig. 2 shows a second MBSFN repetition pattern 21 according to the invention. The second MBSFN repetition pattern 21 is a subset of the first MBSFN repetition pattern 11 shown in Fig. 1. The second MBSFN repetition pattern 21 represents a number of consecutive frames 22, 23, 24 of a data stream 20. In the embodiment according to Fig. 2, four frames 24 out of twenty consecutive frames 22, 23, 24 are marked as radio frames containing MBSFN repetitions. These frames 24 are frames at the position 1, 2, 11 and 14 when counting the frames from the beginning of a corresponding MBSFN repetition pattern 21, wherein the first frame has the position number 0 and the last frame has the position number 19. Comparing the MBSFN repetition pattern 21 according to Fig. 2 with the MBSFN repetition pattern 11 according to Fig. 1, some frames 23 do not contain MBSFN repetitions in Fig. 2 but the corresponding frames 13 do contain MBSFN repetitions in Fig. 1. These are namely the frames at the positions 5, 6, 7, 10. Thus, the MBSFN repetition pattern 21 according to Fig. 2 contains lesser number of repetition frames compared to the MBSFN repetition pattern 11 according to Fig. 1 and is a subset of the MBSFN repetition pattern 11 according to Fig. 1. A Base Station, e.g. an eNodeB, can configure different number of PMCH repetitions for Coverage Enhanced User Equipments at different coverage levels, using the different MBSFN repetition patterns 11, 21. As an example, a first MBSFN repetition pattern 11 according to Fig. 1 is twenty radio frames long and has eight frames 13 containing MBSFN repetitions. A second MBSFN repetition pattern 21 according to Fig. 2 is also twenty radio frames long and has four frames 24 containing MBSFN repetitions. Each frame containing MBSFN repetitions 13, 24 contains a subframe structure 14 comprising ten subframes 15, 16. Three 16 of these subframes 15, 16 contain PMCH repetitions. Thus, the first MBSFN repetition pattern 11 as depicted in Fig. 1 contains twenty-four PMCH repetitions (8 radio frames x 3 subframes in each radio frames). The second MBSFN repetition pattern 21 contains twelve PMCH repetitions (4 radio frames x 3 subframes in each radio frames).

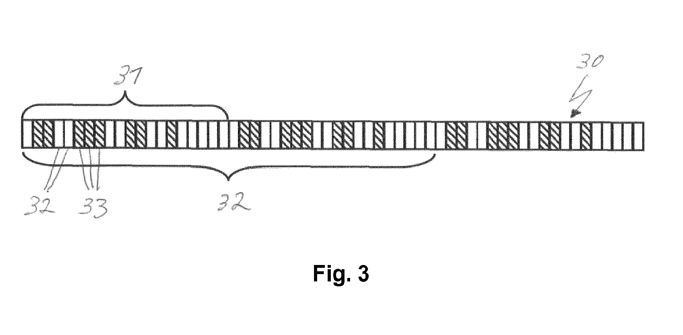

In one embodiment, a Repetition Multiplying Factor as disclosed in Fig. 3 is signaled to the User Equipment. The Repetition Multiplying Factor is broadcast by the Base Station to the User Equipments. In one embodiment, the Repetition Multiplying Factor is multicast or signaled to all or a couple of dedicated Coverage Enhanced User Equipments. In one embodiment, the Coverage Enhances User Equipments and the Base Station have knowledge about the Repetition Multiplying Factor e.g. because it is implemented in the manufacturing process or during a setup process when installing the devices. In one embodiment, the Repetition Multiplying Factor is signaled to the User Equipment in conjunction with the MBSFN repetition pattern 11, 21. The Repetition Multiplying Factor (RMF) indicates to the User Equipment the number of continuous MBSFN repetition patterns 11, 21 in which frames the same MBSFN message are repeated. Thus, the same MBSFN message is repeated in RMF continuous MBSFN repetition pattern. For example, in Fig. 3, a MBSFN repetition pattern 31 with eight radio frames 33 containing MBSFN repetitions is disclosed. The Repetition Multiplying Factor is RMF=2. This means that the same MBSFN message is sent over two MBSFN repetition pattern 31 periods. By changing the Repetition Multiplying Factor and signaling only the Repetition Multiplying Factor to the Coverage Enhances User Equipments, the network is able to change the number of PMCH repetitions without changing the MBSFN repetition pattern 31. This is advantageous, since changing MBSFN repetition pattern and communicating changed MBSFN repetition pattern to the Coverage Enhances User Equipments during operation may lead to disrupted subframes already used for other purposes, e.g. for legacy MBSFN.

In general, if a Coverage Enhances User Equipment is able to decode an MBSFN message which is repeated after the first transmission, it has not to decode the MBSFN repetition message and can ignore the MBSFN repetition message. Thus, the additional processing for Coverage Enhanced User Equipments, which are in an area with good signal quality not needing the repetition of a transmission, is minimized.

In one embodiment the Repetition Multiplying Factor is sent in the PMCH message. This allows dynamic control of the number of PMCH repetitions. The network however would need to indicate the maximum Repetition Multiplying Factor to the User Equipment via higher layer signaling. The Repetition Multiplying Factor in the PMCH message must always be lower or equal than the maximum Repetition Multiplying Factor. If the User Equipment fails to decode the MBSFN message within one MBSFN repetition pattern 31, it combines the next MBSFN repetition pattern 31 up to maximum Repetition Multiplying Factor (*RMF) time. If the User Equipment successfully decodes the MBSFN message, it will read the Repetition Multiplying Factor and will avoid the subsequent MBSFN repetition pattern 31. In one embodiment, the Repetition Multiplying Factor also indicates the starting MBSFN repetition pattern 31.

In one embodiment, in addition to indicating the radio frames and subframes in the MBSFN repetition pattern 11, 21, 31 also the Physical Resource Blocks are indicated. Coverage Extended User Equipments that are bandwidth restricted, as it is often the case with low cost Machine Type Communication devices, may only be able to operate at a limited bandwidth, e.g. 1.4 MHz. In this case, the MBSFN repetition pattern 11, 21, 31 indicates which Physical Resource Blocks contain PMCH repetitions.

In one embodiment, to signal the MBSFN repetition pattern 11, 21, 31 to the User Equipments, a bitmap of size X is transmitted to the User Equipments. X is length of the MBSFN repetition period, e.g. twenty frames according to the Examples of Fig. 1-3. Each bit indicates whether that radio frame contains PMCH repetitions. A further 10 bits bitmap would indicate the subframes in each radio frame that contain PMCH repetitions. In one embodiment, the configuration of an MBSFN repetition pattern 11, 21, 31 is signaled to the User Equipments in the System Information Block 2 (SIB2) in terms of new MBSFN subframe allocation specific for Coverage Enhanced User Equipments. The System Information Block 2 (SIB2) contains common and shared channel configuration information and RACH related configuration. In one embodiment, the allocation of an MBSFN subframe repetition is signaled for each MBSFN area to the User Equipment in the System Information Block 13 (SIB13), which is dedicated to information required to acquire MBMS control information associated with one or more MBSFN area.

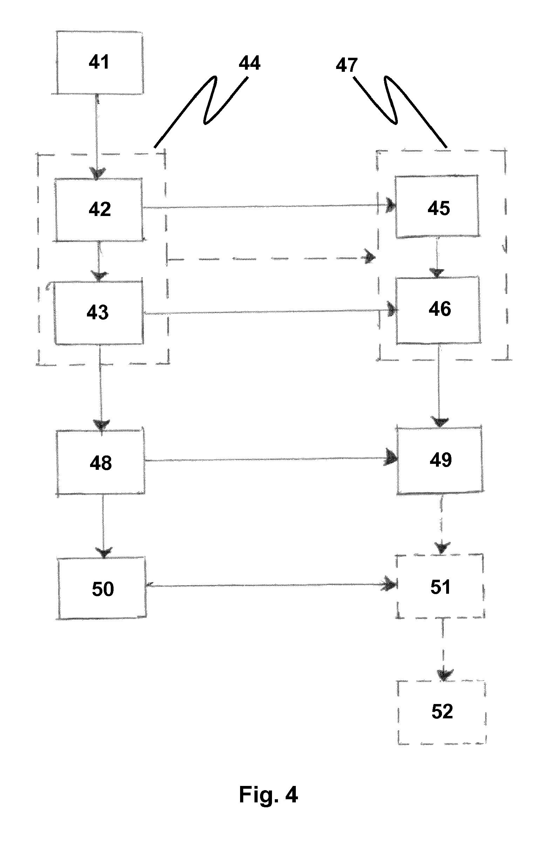

Fig. 4 depicts a method according to the invention. In step 41, a first MBSFN repetition pattern 11, a second MBSFN repetition pattern 21 and a Repetition Multiplying Factor is generated. The first MBSFN repetition pattern 11 and the second MSBFN repetition pattern 21 is signaled to the User Equipments in step 42. In one embodiment, the first MBSFN repetition pattern 11 and the second MSBFN repetition pattern 21 are signaled together. In one embodiment, the first MBSFN repetition pattern 11 and the second MSBFN repetition pattern 21 are signaled one after another. In step 43, the Repetition Multiplying Factor is signaled to the User Equipments. In one embodiment, as indicated in step 44 in Fig. 4, the first MBSFN repetition pattern 11, the second MBSFN repetition pattern 21 and the Repetition Multiplying Factor are signaled together to the User Equipments. A User Equipment receives the first MBSFN repetition pattern 11 and the second MBSFN repetition pattern 21 in step 45. In step 46, the Repetition Multiplying Factor is received by a User Equipment. In case the first MBSFN repetition pattern 11, the second MBSFN repetition pattern 21 and the Repetition Multiplying Factor are signaled together, they are received together in step 47 at the User Equipment. In one embodiment, which is not explicitly disclosed in Fig. 4, the signaling of the first MBSFN repetition pattern 11 and the second MBSFN repetition pattern 21 is performed in a setup mode or in some rarely used reconfiguring modes and the signaling of the Repetition Multiplying Factor is performed more frequently. In step 48, the Base Station transmits the MBMS data to the User Equipment. The User Equipment receives this first transmission of the MBMS data in step 49. Also legacy User Equipment can perform step 49 and get the MBMS service from the signal transmitted. In step 50, the Base Station transmits repetitions of the MBMS data as indicated in the MBSFN repetition patterns 11, 21, 31. The Coverage Enhanced User Equipments receive the physical signal containing MBMS repetitions in step 51. Legacy User Equipments not equipped to perform coverage enhancement cannot perform step 51. In one embodiment, Coverage Enhanced User Equipments determine if they can reproduce the MBMS service from the signal of the first transmission received in step 49. If this is the case, they do not perform steps 51 and 52. If this is not the case, the Coverage Enhanced User Equipment receives the MBMS service repetitions in step 51 and uses in step 52 the data of the initial and/or repeated transmissions of the MBMS service in order to decode the data as described above in.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for coverage enhancement in a cellular network, comprising the steps of:
- generating (41) at least one MBSFN repetition pattern (11, 21, 31) indicating frames (13, 24, 33) that contain repetitive samples of an MBSFN message, and
- signaling (42, 44) the at least one MBSFN repetition pattern (11, 21, 31) to the User Equipment.

2. Method for coverage enhancement in a cellular network according to claim 1, wherein the at least one MBSFN repetition pattern (11, 21, 31) further indicates subframes (16) containing repetition samples.

3. Method for coverage enhancement in a cellular network according to claim 1 or 2, wherein the at least one MBSFN repetition pattern (11, 21, 31) indicates which Physical Resource Blocks in a frame contain the repetitive samples.

4. Method for coverage enhancement in a cellular network according to one of claims 1 or 3, transmitting (48, 50) the MBSFN message repeatedly in the Physical Multicast Channel of the frames as indicated in the MBSFN repetition pattern (11, 21, 31).

5. Method for coverage enhancement in a cellular network according to one of claims 1 to 4, wherein a fist MBSFN repetition pattern (11) is defined and a second MBSFN repetition pattern (21) is defined and the second MBSFN repetition pattern (21) contains lesser number of repetition frames (24) as the first MBSFN repetition pattern (11), and the second MBSFN repetition pattern (21) is a subset of the first MBSFN repetition pattern (11).

6. Method for coverage enhancement in a cellular network according to one of claims 1 to 5, further comprising the step:
- signaling (43, 44) a Repetition Multiplying Factor indicating the number of continuous MBSFN repetition patterns (11, 21, 31) in which repetition frames (13, 24, 33) the same MBSFN message is repeated.

7. Method for coverage enhancement in a cellular network according to claim 6, wherein the Repetition Multiplying Factor is sent in a PMCH message.

8. Method for coverage enhancement in a cellular network according to one of claims 1 to 7, wherein the MBSFN repetition pattern is (11, 21, 31) only signaled to Coverage Enhanced User Equipments.

9. Method for coverage enhancement in a cellular network, comprising the steps of:
- receiving (45, 47) at least one MBSFN repetition pattern (11, 21, 31) indicating frames that contain repetitive samples (13, 24, 33) of a MBSFN message,
- receiving (49, 51) a signal containing repetitive samples (13, 24, 33) of a MBSFN message according to the received MBSFN repetition pattern (11, 21, 31), and
- using (52) at least one repetition of a Physical Multicast Channel to decode the MBSFN message.

10. Method for coverage enhancement in a cellular network according to claim 9, wherein the at least one MBSFN repetition pattern (11, 21, 31) indicates which Physical Resource Blocks in a frame contain the repetitive samples.

11. Method for coverage enhancement in a cellular network according to claim 9 or 10, wherein the energy of the Physical Multicast Channel containing the repetitive samples (13, 24, 33) of the MBSFN message is accumulated for decoding the MBSFN message.

12. Method for coverage enhancement in a cellular network according to one of claims 9 to 11, further comprising the step:
- receiving (46, 47) a Repetition Multiplying Factor indicating the number of continuous MBSFN repetition patterns (11, 21, 31) in which repetition frames (13, 24, 33) the same MBSFN message is repeated.

13. Method for coverage enhancement in a cellular network according to claim 12, wherein the Repetition Multiplying Factor is received in a PMCH message.

14. Base Station in a cellular network, wherein the Base Station performs a method according to one of claims 1 to 8.

15. User Equipment in a cellular network, wherein the User Equipment performs a method according to one of claims 9 to 13.
